# EUROPÄISCHE PATENTSCHRIFT

(11) **EP 2 242 997 B1**
(45) Veröffentlichungstag und Bekanntmachung des Hinweises auf die Patenterteilung: **12.12.2018**
(21) Anmeldenummer: 09711788.1
(22) Anmeldetag: 04.02.2009
(51) Int. Cl.: G01F 1/06, B67D 1/08

(54) **DOSIERVORRICHTUNG FÜR FLUIDGEMISCHE**
METERING DEVICE FOR FLUID MIXTURES
DISPOSITIF DE DOSAGE POUR MÉLANGES DE FLUIDES

(30) Priorität: 18.02.2008 DE 202008002218 U
(43) Veröffentlichungstag der Anmeldung: 27.10.2010
(73) Patentinhaber: Bürkert Werke GmbH, 74653 Ingelfingen (DE)
(72) Erfinder: BACHMANN, René, 01454 Großerkmannsdorf (DE); GROSSE, Kersten, 01445 Radebeul (DE); GUNNESCH, Johann, 74638 Waldenburg (DE); MORCHEL, Thomas, 03238 Finsterwalde (DE); RAMMER, Daniel, 01465 Schönborn (DE)
(74) Vertreter: Prinz & Partner mbB
(86) Internationale Anmeldenummer: PCT/EP2009/000739
(87) Internationale Veröffentlichungsnummer: WO 2009/103418

(56) Entgegenhaltungen:
- WO-A-92/01980
- DE-A1- 3 442 358
- GB-A- 2 055 348
- US-A- 2 078 057
- US-A- 4 173 144

## Beschreibung

Die Erfindung betrifft eine Vorrichtung zum Dosieren von Fluidgemischen, vorzugsweise aus Flüssigkeiten oder einer Flüssigkeit und einem Gas wie z.B. Kohlendioxid.

Dosiervorrichtungen werden beispielsweise in der Getränke- oder Lebensmittelindustrie benötigt.

Dabei soll sowohl ein gewünschtes Flüssigkeitsvolumen exakt einstellbar sein als auch eine definierte Abfüllgeschwindigkeit.

Es ist bekannt, Durchflüsse mit Hilfe von Sensoren wie z.B. einem Flügelrad zu messen.

Die GB 2 055 348 A offenbart eine automatische Einschenkanlage für Bier, in der ein Durchflussmesser mit einem Flügelrad zum Einsatz kommt. Das Flügelrad ist mit einer Scheibe drehfest verbunden, die einen Mikroschalter betätigt, der wiederum den Elektromagneten eines Kontrollventils schaltet. Außerdem sind der Zufluss und der Abfluss des Durchflussmessers rechtwinklig angeordnet und das Fluid wird entlang eines bogenförmigen Weges am Umfang des Flügelrads geleitet.

Ist das zu dosierende Fluid ein Gemisch aus Flüssigkeit und Gas, so werden durch das Gas die Laufeigenschaften des Sensors beeinträchtigt und dadurch die Messwerte verfälscht, was dazu führt, dass eine gewünschte Fluidmenge nicht zuverlässig dosiert werden kann.

Mit der erfindungsgemäßen Vorrichtung soll ermöglicht werden, eine Batchabfüllung innerhalb einer vorgegebenen Zeit zu realisieren. Es ist aber auch eine kontinuierliche Durchflussregelung möglich.

Die in den beigefügten Patentansprüchen angegebene Dosiervorrichtung ermöglicht eine präzise Messung des Durchflusses auch in Anwesenheit von Gas.

Eine spezielle Geometrie des An- und Abströmwinkels des auf einer horizontalen Achse gelagerten Flügelrads bedingt dessen Gasfreiheit auch bei kleinen Abfüllgeschwindigkeiten. Das im Medium nicht gelöste Gas sammelt sich oberhalb der Flüssigkeit und verbleibt nur für kurze Zeit im Sensorbereich.

Eine Verjüngung des Anströmkanals bewirkt zusätzlich, dass das zu dosierende Fluid eine Beschleunigung erfährt. Dies ist von Vorteil bei der Messung im unteren Durchflussbereich.

Einzelheiten der Erfindung ergeben sich aus der folgenden Beschreibung und aus den den beigefügten Zeichnungen, auf die Bezug genommen wird. In den Zeichnungen zeigen:
**Fig. 1** ein Blockdiagramm einer Dosiereinheit gemäß dem Stand der Technik;
**Fig. 2** ein Schnittbild einer erfindungsgemäßen Fluidkanalführung und eines Sensors;
**Fig. 3** ein Schnittbild einer Fluidkanalführung und eines Sensors gemäß Stand der Technik; und
**Fig. 4** ein Schnittbild einer erfindungsgemäßen Dosiervorrichtung.

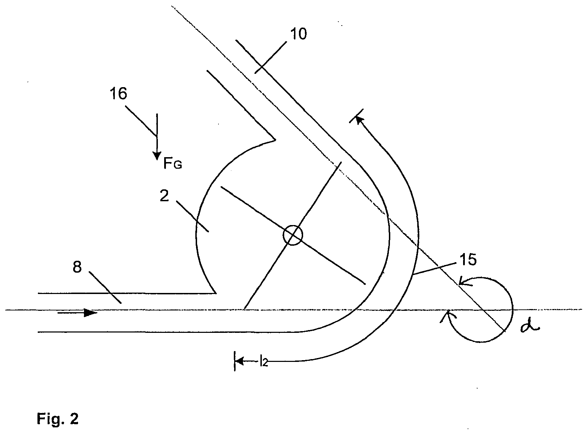

In den Zeichnungen **Fig. 2****,** **3** und **4** zeigt die dort mittels Pfeil eingezeichnete Gewichtskraft 16 die bevorzugte räumliche Anordnung der Vorrichtung oder ein Teil dieser.

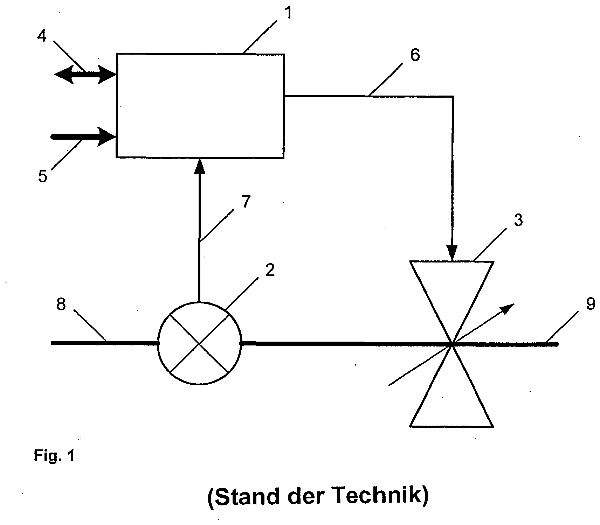

Wie in **Fig. 1** gezeigt, wird in bekannter Weise ein zu dosierendes Fluid durch den Fluidik-Eingang 8 über den Durchflusssensor 2 zum Proportionalventil 3 geleitet. Das Proportionalventil wird mit Hilfe der Regelelektronik 1 über das Ansteuersignal 6 angesteuert.

Die Regelelektronik **1** ist mit der Spannungsversorgung 5 verbunden und kommuniziert mittels Schnittstelle 4 mit dem Benutzer. Auf Grund des Sensorsignals 7 des Durchflusssensors 2 erhält das Proportionalventil 3 sein Ansteuersignal, und die gewünschte Menge Medium gelangt zum Fluidik-Ausgang 9.

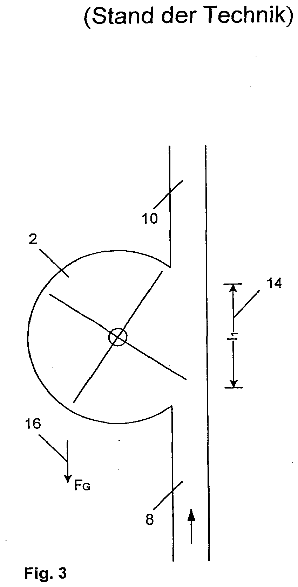

In **Fig. 2** ist ein Schnittbild einer erfindungsgemäßen Fluidkanalführung und eines Sensors dargestellt. Im Vergleich dazu zeigt **Fig. 3** ein Schnittbild einer Fluidkanalführung und eines Sensors gemäß dem Stand der Technik.

Das zu dosierende Fluid fließt vom Eingang 8 über das Flügelrad 2 zum Auslaufkanal 10.

Der Fluidkanal erstreckt sich bei der in Fig. 2 gezeigten Ausführung nicht wie in bekannten Vorrichtungen gemäß Fig. 3 linear auch im Bereich des Sensors, sondern er ist zumindest in einem Teil des Sensorbereichs entsprechend dessen Geometrie teilkreisförmig. Das Fluidgemisch ist auf einer bogenförmigen Bahn geführt. Der durch die Mittelachsen von Einlaufkanal 8 und Auslaufkanal 10 definierte Winkel α ist deutlich größer als 180° und beträgt hier etwa 315°. Wie in den **Fig. 2** und **3** erkennbar, ist dadurch der Fluidmitnahmeweg in der erfindungsgemäßen Vorrichtung deutlich länger als in einer herkömmlichen Dosiervorrichtung. Störendes Gas im Sensorbereich wird so ständig aus diesem Bereich weg in Richtung zum Proportionalventil 3 hin transportiert.

Die dargestellte Kanalgeometrie mit einem möglichst kurzen horizontalen Kanalabschnitt im Bereich des Durchflusssensors verhindert, dass sich Gas in diesem Bereich ansammeln kann. Wesentlich ist in diesem Zusammenhang die horizontale Achse des Flügelrades und der von unten nach oben führende Strömungsweg.

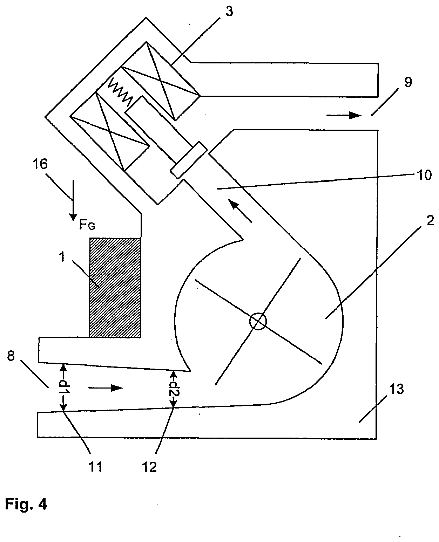

**Fig. 4** zeigt ein Schnittbild eines kompletten erfindungsgemäßen Dosiersystems 13. Darin ist eine Regelelektronik 1 integriert, was eine kompakte Bauweise ermöglicht.

Eine Verjüngung des Fluidik-Eingangkanals 8 wirkt sich zusätzlich günstig auf die Strömung des zu dosierenden Mediums aus. Der Durchmesser des Fluidkanals verringert sich bei 11 von d1 im Bereich des Eingangs 8 bei 12 auf d2 in Sensornähe. Das Proportionalventil 3 ist so angeordnet, dass seine Mittelachse die Verlängerung der Mittelachse des Auslaufkanals 10 in Längsrichtung zwischen Sensor und Ventil darstellt.

Die Steuereinrichtung in Form der Regelelektronik 1 ist mit dem Durchflußsensor 2 und dem durch das Proportionalventil gebildeten Dosierventil in einer baulichen Einheit zusammengefaßt.

Das Dosierventil weist einen am Ende des Auslaufkanals gebildeten Dichtsitz und einen Schließkörper auf, dessen Stirnfläche senkrecht zur Achse des Auslaufkanals ist.

Das Fluidgemisch ist über einen horizontalen Einlaufkanal an die bogenförmige Bahn heran geführt und über einen gegenüber dem Einlaufkanal abgewinkelten Auslaufkanal von der bogenförmigen Bahn in Richtung des Dosierventils geführt.

### Liste der Bezugszeichen

- 1: Digitale Reglerelektronik
- 2: Durchflusssensor (Paddelwheel)
- 3: Proportionalventil (Stellglied)
- 4: Kommunikationsschnittstelle
- 5: Spannungsversorgung
- 6: Ansteuersignal für das Stellglied
- 7: Sensorsignal
- 8: Fluidik Eingang (Einlaufkanal)
- 9: Fluidik Ausgang (Auslaufkanal)
- 10: Auslaufkanal zwischen Sensor und Ventil
- 11: Anfangsdurchmesser Einströmkanal (d₁)
- 12: Enddurchmesser Einströmkanal (d₂)
- 13: Dosiersystem
- 14: Effektiver Paddelwheel Mitnahmeweg kurz (l₁)
- 15: Effektiver Paddelwheel Mitnahmeweg lang (l₂)
- 16: Gewichtskraft

## Patentansprüche

1. Vorrichtung zum Dosieren von Flüssigkeiten, die ein Gas wie Kohlendioxid enthalten, mit einem Durchflußsensor (2), der ein Flügelrad mit horizontaler Achse aufweist und an dessen Umfang das Fluidgemisch auf einer bogenförmigen Bahn geführt ist, mit einem Dosierventil (3) und einer Steuereinrichtung, die eine Regelelektronik (1) ist, und die das Dosierventil (3) abhängig von einer Vorgabe und von dem gemessenen Durchfluß ansteuert, **dadurch gekennzeichnet, dass** die Flüssigkeit über einen horizontalen Einlaufkanal an die bogenförmige Bahn heran geführt und über einen gegenüber dem Einlaufkanal abgewinkelten Auslaufkanal von der bogenförmigen Bahn in Richtung des Dosierventils geführt ist, wobei sich die bogenförmige Bahn über einen durch die Achsen des Einlaufkanals und des Auslaufkanals bestimmten Winkel von mehr als 300° am Umfang des Flügelrades erstreckt und die bogenförmige Bahn von unten nach oben zum Auslaufkanal (10) gerichtet ist, dass das Dosierventil (2) am Ende des Auslaufkanals (10) angeordnet ist, dass die Steuereinrichtung mit dem Durchflußsensor (2) und dem Dosierventil (3) in einer baulichen Einheit zusammengefaßt ist.

2. Vorrichtung nach Anspruch 1, **dadurch gekennzeichnet, daß** der Einlaufkanal zur bogenförmigen Bahn hin verjüngt ist.

3. Vorrichtung nach Anspruch 1, **dadurch gekennzeichnet, daß** das Dosierventil (3) einen am Ende des Auslaufkanals (10) gebildeten Dichtsitz und einen Schließkörper aufweist, dessen Stirnfläche senkrecht zur Achse des Auslaufkanals (10) ist.

4. Vorrichtung nach einem der vorstehenden Ansprüche, **dadurch gekennzeichnet, daß** das Dosierventil (3) ein Proportionalventil ist.

## Claims

1. A device for metering liquids which contain a gas such as carbon dioxide, comprising a flow sensor (2) which includes an impeller having a horizontal axis and at the circumference of which the fluid mixture is guided on an arcuate path, a metering valve (3), and a control means which is a closed-loop control electronics (1) and which drives the metering valve (3) depending on a specification and on the flow rate measured, **characterized in that** the liquid is guided to the arcuate path by means of a horizontal inflow channel and is guided from the arcuate path towards the metering valve by means of an outflow channel that is angled with respect to the inflow channel, the arcuate path extending at the circumference of the impeller over an angle of more than 300 degrees as determined by the axes of the inflow channel and the outflow channel, and the arcuate path being directed to the outflow channel (10) from the bottom up, **in that** the metering valve (2) is arranged at the end of the outflow channel (10), **in that** the control means is combined with the flow sensor (2) and the metering valve (3) in a structural unit.

2. The device according to claim 1, **characterized in that** the inflow channel is tapered towards the arcuate path.

3. The device according to claim 1, **characterized in that** the metering valve (3) includes a sealing seat formed at the end of the outflow channel (10) and a closing body the front face of which is perpendicular to the axis of the outflow channel (10).

4. The device according to any of the preceding claims, **characterized in that** the metering valve (3) is a proportional valve.

## Revendications

1. Dispositif de dosage de liquides qui contiennent un gaz tel que du dioxyde de carbone, comportant un capteur de débit (2) qui présente une roue hélice à axe horizontal et à la périphérie duquel le mélange de fluide est guidé sur une voie arquée, une valve de dosage (3) et un moyen de commande qui est une électronique de régulation (1) et qui pilote la valve de dosage (3) en fonction d'une spécification et du débit mesuré, **caractérisé en ce que** le liquide est guidé vers la voie arquée par un canal d'amenée horizontal et est guidé de la voie arquée en direction de la valve de dosage par un canal de décharge coudé par rapport au canal d'amenée, la voie arquée s'étendant à la périphérie de la roue hélice sur un angle supérieur à 300° déterminé par les axes du canal d'amenée et du canal de décharge, et la voie arquée étant dirigée du bas vers le haut vers le canal de décharge (10), **en ce que** la valve de dosage (2) est agencée à l'extrémité du canal de décharge (10), **en ce que** le moyen de commande est regroupé avec le capteur de débit (2) et la valve de dosage (3) dans une unité structurelle.

2. Dispositif selon la revendication 1, **caractérisé en ce que** le canal d'amenée se rétrécit vers la voie arquée.

3. Dispositif selon la revendication 1, **caractérisé en ce que** la valve de dosage (3) présente un siège d'étanchéité réalisé à l'extrémité du canal de décharge (10) et un corps de fermeture dont la face frontale est perpendiculaire à l'axe du canal de décharge (10).

4. Dispositif selon l'une des revendications précédentes, **caractérisé en ce que** la valve de dosage (3) est une valve proportionnelle.
